# EUROPÄISCHE PATENTSCHRIFT

(11) **EP 1 521 040 B1**
(45) Veröffentlichungstag und Bekanntmachung des Hinweises auf die Patenterteilung: **29.11.2006**
(21) Anmeldenummer: 03405708.3
(22) Anmeldetag: 01.10.2003
(51) Int. Cl.: F24F 3/14, B01D 53/26

(54) **Vorrichtung zur Entfeuchtung von Raumluft**
Room air dehumidifying device
Dispositif pour absorber l'humidité de l'air ambiant d'un local

(43) Veröffentlichungstag der Anmeldung: 06.04.2005
(73) Patentinhaber: Imes Management AG, 6330 Cham (CH)
(72) Erfinder: Weidmann, Urs A., 6300 Zug (CH)
(74) Vertreter: Liebetanz, Michael

(56) Entgegenhaltungen:
- EP-A- 1 052 458
- US-A1- 2002 096 312
- US-A1- 2002 185 266
- US-B1- 6 178 966

## Beschreibung

Die Erfindung betrifft eine Vorrichtung zur Entfeuchtung von Raumluft gemäss dem Oberbegriff des Anspruchs 1. Eine solche ist aus US 6,178,966 bekannt, bei der Frischluft- und Abluftstrom durch eine wasserpermeable Membran getrennt sind.

Ein technisches Merkmal solcher Verfahren ist die Vermeidung von Kondensation an den Vorrichtungen und die Konstruktion von Elementen zur Abführung des Wassers. Eine solche Vorrichtung ist aus der DE 198 16 185 C1 bekannt, bei der eine indirekte Absorption durch Einsatz einer wasser- und/oder wasserdampfpermeablen Struktur erreicht wird, wobei das Wasser in eine hygroskopische Kühlflüssigkeit übergeht. Dies erfordert einen zusätzlichen aufwändigen Kühlkreislauf.

Aus dem Stand der Technik sind seit der ersten Hälfte des 20sten Jahrhunderts eine Reihe von rotierenden Wärmetauscher bekannt, mit denen die in einem Abluftvolumen bestehende Raumluftfeuchtigkeit aus der Abluft entfernt und frischer Zuluft zugeführt wird. Damit ist es möglich, die in der Abluft befindliche Wärme und Feuchtigkeit direkt in die Zuluft weiterzuleiten, ohne dass der Umweg über die Kondensation des Wassers oder des Wasserdampfes zu gehen ist. In der EP 0 159 986 (US 4,633,936) ist ein vorteilhaftes Verfahren zu der Herstellung eines solchen Wärmetauschers veröffentlicht worden. Dieser Wärmetauscher besteht aus zwei Flächen, die in einer Spirale gewunden sind, um den Wärmetauscherrotor zu bilden. In Längsachsenrichtung sind somit Gruppen von Kanälen gebildet, die wechselweise den warmen abzukühlenden und den kalten aufzuheizenden Luftstrom durchlassen. Hier wird die Wasser-Haftung an Materialien ohne Kondensation genutzt. Eine Steuerung der Entfeuchtung ist in gewissem Masse mit der Trommelgeschwindigkeit regelbar, was aber direkte Auswirkung auf den Geräuschpegel hat.

Nachteilig ist hierbei beispielsweise, das diese Vorrichtungen eine Reihe von beweglichen Teilen umfassen, die demgemäss der Wartung und dem Verschleiss unterliegen.

Ferner ist es beispielsweise in Wohnhäusern von Nachteil, dass mit der übertragenen Feuchtigkeit auch Geruchstoffe in die frische Raumluft übertragen werden.

Ausgehend von diesem Stand der Technik liegt der Erfindung die Aufgabe zugrunde, eine Vorrichtung der eingangs genannten Art derart zu verbessern, dass sie einfacher und energetisch günstiger aufzubauen ist und eine Feuchtigkeitsübertragung möglichst geruchsfrei vonstatten geht. Insbesondere ist es Ziel der Erfindung, einen verschleissarmen und geräuscharmen Wasserentfeuchter für die Wohnraumbelüftung anzugeben.

Eine solche Vorrichtung ist mit den Merkmalen des Anspruchs 1 gekennzeichnet.

Unter wasser- und/oder wasserdampfpermeable Struktur ist eine Membran, Folie oder poröse Struktur zu verstehen, die bei einem Vorliegen von unterschiedlichen Partialdrücken auf den beiden Seiten der Struktur Wasser und/oder Wasserdampf hindurchtreten lässt, sonstige Stoffe oder Gase aber im wesentlichen nicht. Es lassen sich bei Bedingungen von beispielsweise rund 30 Grad Celsius Temperatur und einer Partialdruckdifferenz in der Grössenordnung von 100 Millibar eine Permeabilität von 10 bis 20 Meter pro Stunde und Bar erreichen.

Weitere vorteilhafte Ausführungsbeispiele sind in den Unteransprüchen gekennzeichnet.

Die Erfindung wird nun mit Ausführungsbeispielen anhand der Zeichnung beispielhaften näher beschrieben. Es zeigen:
- Fig. 1: eine schematische perspektivische Ansicht einer Vorrichtung zur Entfeuchtung von Raumluft in Form einer Prinzipskizze,
- Fig. 2: eine schematische perspektivische Ansicht einer Vorrichtung gemäss einem Ausführungsbeispiel der Erfindung in Form einer Prinzipskizze, und
- Fig. 3: eine schematische perspektivische Ansicht einer Vorrichtung zur Entfeuchtung von Raumluft in Form einer Prinzipskizze.

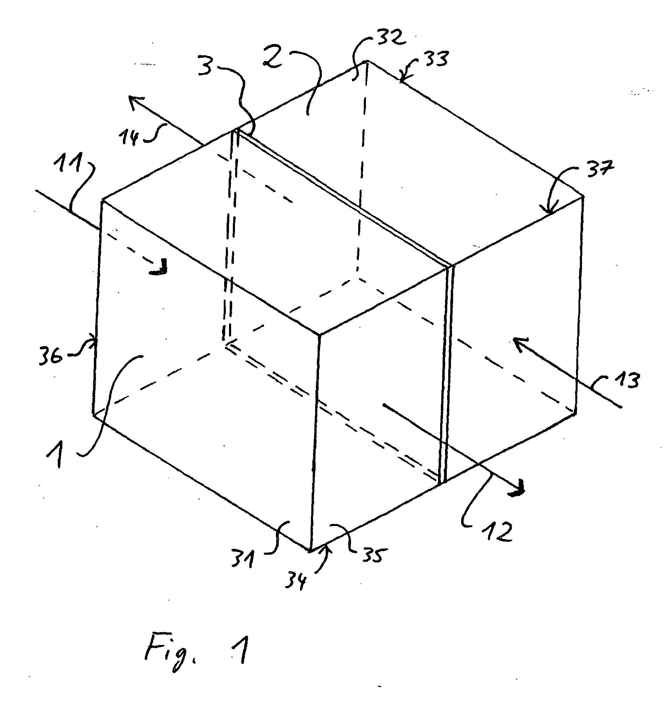

Die Fig. 1 zeigt eine schematische perspektivische Ansicht einer Vorrichtung zur Entfeuchtung von Raumluft mit einem länglichen Volumen, das nur an zwei gegenüberliegenden Mündungen Öffnungen hat. Das Prinzipbild eines Abschnittes eines solchen Volumens ist in Fig. 1 dargestellt. Das besagte Volumen verfügt über mindestens einen ersten Hohlraum 1 und mindestens einen zweiten Hohlraum 2, die durch mindestens eine wasser- und/oder wasserdampfpermeable Membran 3 getrennt sind. Es ist im Prinzip jede Membran oder flächenhafte Struktur verwendbar, die Wasser oder Wasserdampf durchlässt, aber gegenüber Gasen und anderen Molekülen sperrt. Eine solche Struktur kann auch ein poröses starres Material sein. Bei anderen Molekülen kann es sich im häuslichen Umfeld insbesondere um Küchen- oder Nassraumgerüche handeln.

Die Hohlräume 1 und 2 sind bei dargestellten Ausführungsbeispiel an vier Seiten 31, 32, 33 und 34 von "harten" undurchlässigen Wänden umgeben, so dass sich die Hohlräume 1 und 2 als Schlauch darstellen. Die Membran 3 ist dazwischen als Trennwand aufgespannt. Sie liegt jeweils in Richtung der die Hohlräume 1, 2 durchströmenden Fluidströme 11, 12, 13, 14. Dabei ist der erste Hohlraum 1 von einem ersten zu entfeuchtenden Luftstrom 11, 12 durchströmbar. Der zweite Hohlraum 2 ist von einem zweiten Luftstrom 13, 14 durchströmbar. Dabei verlaufen die Luftströme vorteilhafterweise aber nicht notwendigerweise im Gegenstrom, wie in der Fig. 1 dargestellt.

Vorteilhafterweise sind einige der Luftströme 11 bis 14 mit mindestens einer Pumpe verbunden, die die Luftströme in Bewegung hält und somit Luft zu- und abführt. Die Mündungen des "Schlauches", in der Prinzipskizze hier die Seiten 35 und 36 müssen nicht nebeneinander liegen. Wesentlich ist allerdings die Grösse der durch die Membran 3 aufgespannte Fläche, so dass der Schlauch häufig und vorteilhafterweise in Mäanderform geführt wird. Die Höhe der über der Membran stehenden Luftsäule, das heisst, die der Länge der mit 37 bezeichneten Kante entspricht, kann beispielsweise 1 bis 5 Zentimeter betragen. Sie darf nicht zu gross werden, um es der Luft zu ermöglichen zum Wasseraustausch an die Membranoberfläche zu gelangen. Durch eine Steuerung der Geschwindigkeit des einen (11, 12) oder des anderen (13, 14) Luftstroms kann die Entfeuchtung direkt gesteuert werden.

Die Bezeichnung der Luftströme in der Klimatechnik kann beispielsweise sein: Aussenluft 11 und Zuluft 12 zu den Räumen sowie Abluft 13 von den Räumen und Fortluft 14, in die Umgebung abzugeben.

Mit der Vorrichtung nach der Fig. 1 ist eine Feuchtigkeitsrückgewinnung durch eine stationäre, selektiv durchlässige Membran angegeben.

Bei einem in den Fig. nicht dargestellten Ausführungsbeispiel sind die Wände 31 und 33 keine undurchlässigen Wände, sondern bestehen ebenfalls aus Membranmaterial 3. Dann ergibt sich in Analogie zu einem Plattenwärmetauscher eine Plattenkonfiguration wobei nebeneinander immer ein Hohlraum 1 für den Luftstrom 11, 12 von einem Hohlraum 2 für den Luftstrom 13, 14 abgelöst wird. Dies erhöht die Möglichkeit des Erhöhens der über der Membran 3 stehenden Luftsäule der Kantenlänge 37. In jedem Fall gibt die wasserreichere Abluft 13 dieses Wasser / diesen Wasserdampf über die Membran 3 ab in die Zuluft 12, die den Räumen zugeführt wird.

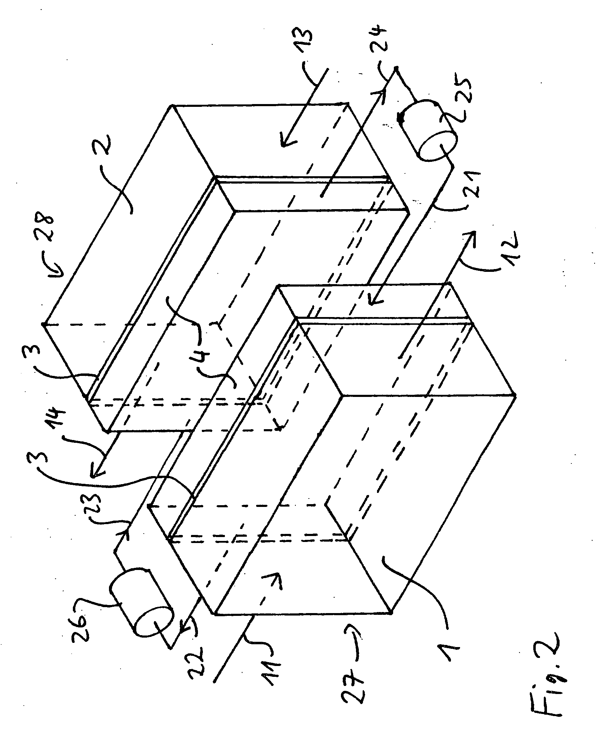

Die Fig. 2 zeigt eine schematische perspektivische Ansicht einer Vorrichtung gemäss einem Ausführungsbeispiel der Erfindung in Form einer Prinzipskizze. Dabei werden gleiche Merkmale immer mit gleichen Bezugszeichen versehen.

Nach aussen sind es immer noch die Luftströme 11, 12, 13 und 14, die dieselben Funktionen einnehmen wie oben beschrieben. Die Entfeuchtung ist aber bei diesem Ausführungsbeispiel in grossem Masse steuerbar. Zwei Tauschermodule 27 und 28 sind nun getrennt aufgebaut. Jedes Tauschermodul 27 und 28 verfügt über den einen Hohlraum 1 bzw. 2 und ein zusätzlichen Tauschhohlraum 4. Die Körper 27 und 28 müssen insbesondere auch nicht nebeneinander liegen, wie hier dargestellt. Insbesondere ist es auch möglich, die Hohlräume im Sandwich aufzubauen, zum Beispiel 1-4-1 bzw. 2-4-2, so dass ein Tauscherhohlraum 1 jeweils zwischen zwei Luftstromhohlräumen liegt. Auch ist eine Volumenreduktion durch einen mäanderförmigen Aufbau möglich.

Wesentlich ist bei dem Ausführungsbeispiel nach der Fig. 2, dass ein geschlossener zweiter Luftkreislauf aufgebaut worden ist, der aus den Luftströmen 21, 22, 23 und 24 besteht. Diese werden durch eine oder mehrere, hier zwei, Pumpen 25 und 26 angetrieben. Die Umlaufgeschwindigkeit in dem geschlossenen Kreislauf ist regelbar, insbesondere in einem Bereich zwischen 0,5 bis 20 mal die Luftstromgeschwindigkeit der Luftströme 11, 12 und 13, 14. Damit ist bei hoher Geschwindigkeit eine hohe Entfeuchtung im Tauscher 28 zu erreichen, die entsprechend diese Feuchte im Tauscher 27 in das Volumen 2 abgibt. Genauso kann durch Verringern der Geschwindigkeit auch das Entfeuchten vermindert werden. Vorteilhafterweise wird die Vorrichtung auch hier im Gegenstrom betrieben.

Im Sommer ergibt sich ein weiterer interessanter Betriebsmodus dieser Anordnung. Die Pumpe 26 wird abgestellt und es schliessen sich Sperrventile im Luftstrom 22 und 23. Über ein Ventilsystem werden die Luftströme 21 mit 24 zusammengeleitet. Pumpe 25 läuft und fördert die Luftmenge aus den Hohlräumen 4 in die Fortluft 14. Durch den Unterdruck in den Hohlräumen werden beide Hohlräume 1 und 2 entfeuchtet. Dies ergibt dann den für den Sommer und hohen Temperaturen interessanten Fall, dass bei einer entsprechend erzeugten Vakuumwirkung durch die Pumpe 25, wenn Sperrventile im Bereich von 21 oder 23 vorgesehen sind, zwei entfeuchtete Luftströme bestehen, die folgende Vorgehensweise erlauben. Es kann dann in den Bereich der Fortluft 14 Wasser abgegeben, was einerseits direkt durch das Wasser selber einen Kühleffekt bewirkt. Andererseits und vor allem wird die Temperatur des Luftstroms 14 durch Verdunstungskühlung herabgesetzt. Damit kühlt die Fortluft 14 durch Kontakt und Verdunstung ab und es wird über einen Wärmetauscher (Fortluft-Aussenluft) die Temperatur der Aussenluft 11 herabgesetzt, die somit an heissen Sommertagen als kühlere Luft in die zu lüftenden Räumlichkeiten geleitet wird. Durch eine weitere Wasserzugabe in die trockene Zuluft 12 kann die Temperatur nochmals abgesenkt werden.

Mit anderen Worten kann für eine Vorrichtung nach der Fig. 2 festgehalten werden, dass die Entfeuchtung regelbar ist, wobei auch bei einem einzigen Ventilator 25 (Ventilator 26 wäre weggelassen worden) durch Drehzahlregelung die Feuchtigkeitsübertragung gleichsinnig gesteuert werden kann.

Der geschlossene Innenkreislauf 21 bis 24 gestattet insbesondere eine Trennung der mit dem Umpumpen verbundenen Geräusche von den mit den Wohnräumen einer Belüftungslösung verbundenen Luftströmen und damit eine sehr einfache Geräuschisolierung.

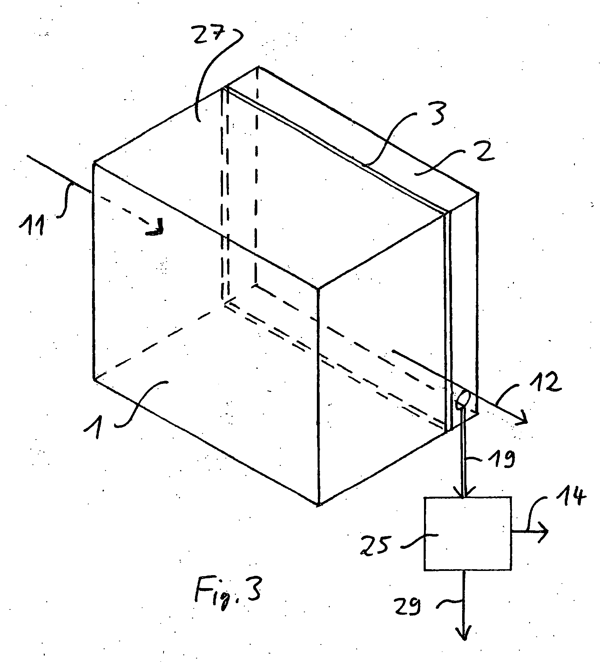

Die Fig. 3 zeigt eine schematische perspektivische Ansicht einer Vorrichtung zur Entfeuchtung von Raumluft in Form einer Prinzipskizze.

Nach aussen nehmen die Luftströme 11, 12 und 14 dieselben Funktionen ein wie bei den anderen Ausführungsbeispielen oben beschrieben. Die Entfeuchtung ist aber auf einen Zweig beschränkt. Es besteht nur ein Tauschermodul 27. Das Tauschermodul 27 verfügt über die Hohlräume 1 und 2, die wieder durch die wasserund/oder wasserdampfpermeable Membran 3 getrennt sind. Der zweite Hohlraum 2 wird aber nur über eine Leitung 19 mit einer Pumpe 25 verbunden, die gleichzeitig einen Kondenswasserabscheider umfasst. Damit entsteht durch die Saugwirkung der Pumpe 25 in dem Hohlraum 2 ein Unterdruck, so dass eine erhöhte Entfeuchtung verursacht wird. Das entsprechende Kondenswasser 29 wird abgeschieden und die angesaugte Luft wird in den Abluftstrom 14 gegeben.

Für alle Ausführungsbeispiele, die in den Fig. gezeigten als auch nur im Text erwähnte sowie solche Ausführungsbeispiele, die sich aus den beigefügten Ansprüchen ergeben, ist es wesentlich, dass in einem Betriebsunterbruch die Hohlräume 1, 2 und/oder 4 reinigbar sind. In einer einfachen Ausgestaltung weisen die besagten Hohlräume einzelne oder mehrere entsprechende Öffnungen für Zuflüsse und Abflüsse auf, in die beispielsweise Wasser gegeben werden kann, so dass sich das Volumen der Hohlräume komplett mit Wasser füllt. Dann kann durch ein oder mehrere zusätzlich angeordnetes Heizelemente das Wasser beispielsweise bis zum Siedepunkt erhitzt und bei dieser Temperatur gehalten werden. Nach einer Zeit von beispielsweise 30 Minuten bis 1 Stunde wird dann das Wasser abgelassen, so dass die sich an den Wänden und insbesondere in der wasserpermeablen Struktur, die eine Membran oder auch porös sein kann, abgesetzten Partikel aus dieser oder den anderen Wänden gelöst haben und abgeleitet werden können. Zudem ergibt sich ein Sterilisationseffekt der Membran.

Bei einer anderen Reinigungsmethode sind UV-Lampen vorgesehen, die in den Strukturen abgesetzte Keime abtöten. Auch ist die Beschichtung der Folie mit Silberverbindungen möglich, um eine entsprechende Keimfreiheit der Oberflächen zu erreichen.

## Patentansprüche

1. Vorrichtung zur Entfeuchtung von Raumluft mit einer aus mindestens einem ersten Hohlraum (1) und mindestens einem zweiten Hohlraum (2) bestehenden Kammer, wobei die Hohlräume durch mindestens eine wasser- und/oder wasserdampfpermeable Struktur (3) getrennt sind, die jeweils in Richtung der die Hohlräume (1, 2) der Kammer durchströmenden Fluidströme liegen, wobei der erste Hohlraum (1) von einem ersten zu entfeuchtenden Luftstrom (11, 12) durchströmbar ist, wobei der zweite Hohlraum (2) von einem zweiten Luftstrom (13, 14) durchströmbar ist, **dadurch gekennzeichnet, dass** der erste Hohlraum (1) von einem ersten Zwischenvolumen (4) durch eine erste wasser- und/oder wasserdampfpermeable Struktur (3) getrennt ist, dass der zweite Hohlraum (2) von einem zweiten Zwischenvolumen (4) durch eine zweite wasser- und/oder wasserdampfpermeable Struktur (3) getrennt ist, und dass die beiden Zwischenvolumen (4) in einem Luftstrom-Kreislauf (21, 22, 23, 24) miteinander verbunden sind.

2. Vorrichtung nach Anspruch 1, **dadurch gekennzeichnet, dass** mindestens eine Pumpe (25, 26) in dem besagten Luftstrom-Kreislauf (21, 22, 23, 24) angeordnet ist, mit der die Strömungsgeschwindigkeit des besagten geschlossenen Luftstrom-Kreislaufs (21, 22, 23, 24) regelbar ist, insbesondere in einem Bereich zwischen 0,5 und 20 mal der Strömungsgeschwindigkeit in dem ersten Luftstrom (11, 12) und/oder zweiten Luftstrom (13, 14).

3. Vorrichtung nach Anspruch 1 oder 2, **dadurch gekennzeichnet, dass** der Luftstrom-Kreislauf (21, 22, 23, 24) an mindestens einer Stelle hinter den Pumpen (25, 26) auftrennbar ist, um in mindestens einem der Zwischenvolumina (2) einen Unterdruck zu erzeugen.

4. Vorrichtung nach Anspruch 1, **dadurch gekennzeichnet, dass** die Kammer aus einer Abfolge von erstem Hohlraum (1), erstem Zwischenvolumen (4), erstem Hohlraum (1), erstem Zwischenvolumen (4), zweitem Zwischenvolumen (4), zweitem Hohlraum (2), zweitem Zwischenvolumen (4), erstem Zwischenvolumen (4), erstem Hohlraum (1)) gebildet wird, die durch die besagte wasser- und/oder wasserdampfpermeable Struktur (3) getrennt sind.

5. Vorrichtung nach einem der Ansprüche 1 bis 4, **dadurch gekennzeichnet, dass** der zweite Luftstrom aus den zu lüftenden Räumlichkeiten stammender Abluft (13) besteht, die durch den zweiten Hohlraum (2) geleitet als Fortluft (14) nach ausserhalb der zu lüftenden Räumlichkeiten abzuführen ist.

6. Vorrichtung nach einem der Ansprüche 1 bis 5, **dadurch gekennzeichnet, dass** die besagten Hohlräume (1, 2 bzw. 1, 4 und 2,4) der Kammer in gefalteter Bauweise raumsparend angeordnet werden.

7. Vorrichtung nach einem der Ansprüche 1 bis 6, **dadurch gekennzeichnet, dass** die Hohlräume (1, 2, 4) der Kammer über mindestens einen Ein-/Auslass verfügen, so dass sie durch Reinigungsfluidzuführung einzeln oder zusammen flutbar sind, und/oder dass ein oder mehrere Heizelemente in den Hohlräumen (1, 2, 4) zur Erhitzung des zuführbaren Reinigungsfluids vorgesehen sind.

8. Vorrichtung nach einem der Ansprüche 1 bis 7, **dadurch gekennzeichnet, dass** hinter mindestens einem Hohlraum (1, 2) eine Flüssigkeitszugabe erfolgt, um die Temperatur des jeweiligen entfeuchteten Luftstroms (12, 14) durch Verdunstungswärme zu verringern.

9. Vorrichtung nach einem der Ansprüche 1 bis 8, **dadurch gekennzeichnet, dass** die besagte wasser- und/oder wasserdampfpermeable Struktur (3) lediglich und im wesentlichen für Wassermoleküle, nicht aber für Gasmoleküle und/oder Geruchsstoffe permeabel ist.

## Claims

1. A device for dehumidifying room air, having a chamber consisting of at least one first cavity (1) and at least one second cavity (2), the cavities being separated by at least one water-permeable and/or water-vapor-permeable structure (3), these structures (3) lying in each case in the direction of the fluid streams flowing through the cavities (1, 2) of the chamber, it being possible for a first air stream (11, 12) which is to be dehumidified to flow through the first cavity (1), wherein a second air stream (13, 14) can flow through the second cavity (2), **characterized in that** the first cavity (1) is separated from a first intermediate volume (4) by a first water-permeable and/or water-vapor-permeable structure (3), wherein the second cavity (2) is separated from a second intermediate volume (4) by a second water-permeable and/or water-vapor-permeable structure (3), and wherein the two intermediate volumes (4) are connected to one another in an air-stream circuit (21, 22, 23, 24).

2. The device as claimed in claim 1, **characterized in that** at least one pump (25, 26) is arranged in said air-stream circuit (21, 22, 23, 24), with which pump (25, 26) the flow velocity of said closed air-stream circuit (21, 22, 23, 24) can be regulated, in particular within a range of between 0.5 and 20 times the flow velocity in the first air stream (11, 12) and/or second air stream (13, 14).

3. The device as claimed in claim 1 or 2, **characterized in that** the air-stream circuit (21, 22, 23, 24) can be severed at at least one point downstream of the pumps (25, 26) in order to produce a vacuum in at least one of the intermediate volumes (2).

4. The device as claimed in claim 1, **characterized in that** the chamber is formed from a sequence of first cavity (1), first intermediate volume (4), first cavity (1), first intermediate volume (4), second intermediate volume (4), second cavity (2), second intermediate volume (4), first intermediate volume (4), first cavity (1), which are separated by said water-permeable and/or water-vapor-permeable structure (3).

5. The device as claimed in one of claims 1 to 4, **characterized in that** the second air stream consists of the outgoing air (13) which originates from the rooms to be ventilated and which, directed as exhaust air (14) through the second cavity (2), is to be discharged out of the rooms to be ventilated.

6. The device as claimed in one of claims 1 to 6, **characterized in that** said cavities (1, 2 or 1, 4 and 2, 4) of the chamber are arranged in a space-saving manner in a folded type of construction.

7. The device as claimed in one of claims 1 to 6, **characterized in that** the cavities (1, 2, 4) of the chamber have at least one inlet/outlet, so that they can be flooded together or individually by cleaning fluid being supplied, and/or wherein one or more heating elements are provided in the cavities (1, 2, 4) for heating the cleaning fluid which can be supplied.

8. The device as claimed in one of claims 1 to 7, **characterized in that** liquid is added downstream of at least one cavity (1, 2) in order to reduce the temperature of the respective dehumidified air stream (12, 14) by evaporation heat.

9. The device as claimed in one of claims 1 to 8, wherein said water-permeable and/or water-vapor-permeable structure (3) is merely and essentially permeable to water molecules but not to gas molecules and/or odor substances.

## Revendications

1. Dispositif de déshumidification de l'air d'un local, qui présente au moins une chambre constituée d'une première cavité (1) et d'au moins une deuxième cavité (2), les cavités étant séparés par au moins une structure (3) perméable à l'eau ou à la vapeur d'eau, situé dans la direction des écoulements de fluide qui traversent les cavités (1, 2) de la chambre, la première cavité (1) pouvant être traversé par un premier écoulement d'air (11, 12) qui doit être déshumidifié et la deuxième cavité (2) pouvant être traversé par un deuxième écoulement d'air (13, 14), **caractérisé en ce que** la première cavité (1) est séparée d'un premier volume intermédiaire (4) par une première structure (3) perméable à l'eau et/ou à la vapeur d'eau, **en ce que** la deuxième cavité (2) est séparée d'un deuxième volume intermédiaire (4) par une deuxième structure (3) perméable à l'eau et/ou à la vapeur d'eau et **en ce que** les deux volumes intermédiaires (4) sont reliés l'un à l'autre dans un circuit (21, 22, 23, 24) d'écoulement d'air.

2. Dispositif selon la revendication 1, **caractérisé en ce qu'**au moins une pompe (25, 26) est disposée dans ledit circuit (21, 22, 23, 24) d'écoulement d'air et permet de régler la vitesse d'écoulement dans ledit circuit fermé (21, 22, 23, 24) d'écoulement d'air, en particulier dans une plage comprise entre 0,5 et 20 fois la vitesse d'écoulement du premier écoulement d'air (11, 12) et/ou du deuxième écoulement d'air (13, 14).

3. Dispositif selon les revendications 1 ou 2, **caractérisé en ce que** le circuit (21, 22, 23, 24) d'écoulement d'air peut être coupé en au moins un emplacement situé en aval des pompes (25, 26) pour créer une dépression dans au moins l'un des volumes intermédiaires (2).

4. Dispositif selon la revendication 1, **caractérisé en ce que** la chambre est formée de la succession du première cavité (1), du premier volume intermédiaire (4), de la première cavité (1), du premier volume intermédiaire (4), du deuxième volume intermédiaire (4), de la deuxième cavité (2), du deuxième volume intermédiaire (4), du premier volume intermédiaire (4), de la première cavité (1), qui sont séparés par ladite structure (3) perméable à l'eau et/ou à la vapeur d'eau.

5. Dispositif selon l'une des revendications 1 à 4, **caractérisé en ce que** le deuxième écoulement d'air est constitué d'air évacué (13) des locaux à ventiler, qui doit être évacué hors des locaux à ventiler sous la forme d'air (14) refoulé à travers le deuxième espace creux (2).

6. Dispositif selon l'une des revendications 1 à 5, **caractérisé en ce que** lesdites cavités (1, 2 ou 1, 4 et 2, 4) de la chambre sont disposés dans une structure compacte repliée.

7. Dispositif selon l'une des revendications 1 à 6, **caractérisé en ce que** les cavités (1, 2, 4) des chambres disposent d'au moins une entrée et/ou une sortie de manière à pouvoir être balayés individuellement ou ensemble par l'apport d'un fluide de nettoyage et/ou **en ce qu'**un ou plusieurs éléments chauffants sont prévus dans les cavités (1, 2, 4) pour chauffer le fluide de nettoyage qui peut leur être apporté.

8. Dispositif selon l'une des revendications 1 à 7, **caractérisé en ce qu'**une addition de liquide qui abaisse la température de l'écoulement d'air déshumidifié (12, 14) par chaleur d'évaporation a lieu en aval d'au moins une cavité (1, 2).

9. Dispositif selon l'une des revendications 1 à 8, **caractérisé en ce que** ladite structure (3) perméable à l'eau et/ou à la vapeur d'eau n'est essentiellement perméable qu'aux molécules d'eau et n'est pas perméable aux molécules de gaz et/ou aux substances odorantes.
